# EUROPÄISCHE PATENTSCHRIFT

(11) **EP 1 804 009 B1**
(45) Veröffentlichungstag und Bekanntmachung des Hinweises auf die Patenterteilung: **06.11.2013**
(21) Anmeldenummer: 06025284.8
(22) Anmeldetag: 07.12.2006
(51) Int. Cl.: F24J 2/40, F24D 19/10, G01K 15/00

(54) **Verfahren zum Betreiben einer Solaranlage**
Method for operating a solar energy system
Procédé de fonctionnement d' une installation solaire

(30) Priorität: 16.12.2005 DE 102005060226
(43) Veröffentlichungstag der Anmeldung: 04.07.2007
(73) Patentinhaber: ROBERT BOSCH GMBH, 70442 Stuttgart (DE)
(72) Erfinder: Lustig, Konrad, Dr., 73730 Esslingen (DE)

(56) Entgegenhaltungen:
- EP-A2- 0 676 682
- DE-A1- 3 001 550
- DE-A1- 19 647 216

## Beschreibung

Die Erfindung betrifft ein Verfahren zum Betreiben einer Solaranlage nach dem Oberbegriff des Patentanspruches 1.

Gattungsgemäße Solaranlagen zur Warmwasserbereitung und/oder zur Heizungsunterstützung weisen Sonnenkollektoren auf, die ein Kollektorfeld bilden. Diese sind an einen Solarkreis mit Pumpe und mit einer Solarflüssigkeit als Wärmeträgermedium angeschlossen, mit dem die Solarwärme auf einen Warmwasserspeicher und/oder auf einen Heizungskreislauf der Gebäudebeheizung übertragen wird. Die Warmwasserspeicher besitzen einen Wärmetauscher im unteren Bereich zur Übertragung der Wärme aus dem Solarkreislauf an das Wasservolumen. Da die solare Wärme nicht unbegrenzt zur Verfügung steht, weisen derartige Warmwasserspeicher in der Regel einen weiteren Wärmetauscher auf, mit dem nur der obere Bereich durch eine so genannte Nachladung über den Wärmeerzeuger erwärmt werden kann. Für einen günstigen Wirkungsgrad der Solaranlage ist es generell wichtig, dass vorrangig das solare Wärmeangebot zum Aufheizen des Warmwasserspeichers und/oder zur Heizungsunterstützung dient, und dass eine Nachladung durch den Wärmeerzeuger nach Möglichkeit nur in wenigen Fällen erfolgt, um eine gute Energiebilanz zu erzielen.

Die Pumpe im Solarkreis wird üblicherweise nach der Temperaturdifferenz zwischen den an einem Kollektortemperaturfühler und einem Speichertemperaturfühler erfassten Temperaturen geregelt. Der Speichertemperaturfühler kann entweder direkt im unteren Bereich des Warmwasserspeichers oder in der dort einmündenden Rücklaufleitung des Solarkreises montiert sein. Der Kollektortemperaturfühler muss an der wärmsten Stelle im Kollektorfeld positioniert sein. Diese Stelle ist üblicherweise der Austritt des Wärmeträgermediums aus dem Kollektorfeld, also die Vorlaufleitung. Kollektor- und Speichertemperaturfühler besitzen wahlweise gleiche oder unterschiedliche Typcharakteristiken und physikalische Wirkungsweisen und sind an einen Regler für die Solaranlage angeschlossen.

Unterschiedliche Charakteristiken bei Temperaturfühlern ergeben sich zum Beispiel durch unterschiedliche Messbereiche. So reichen für einen Speichertemperaturfühler 0-100 °C aus, und für Kollektortemperaturfühler ist es notwendig, auch Temperaturen oberhalb von 100 °C mit hoher Auflösung zu messen. Dazu gibt es spezielle Temperaturfühler mit geänderter Kennlinie, damit der erweiterte Temperaturbereich bei gleichem Messspannungsbereich dargestellt werden kann. Somit sind in einem Solarsystem meistens zwei verschiedene Fühlertypen vorhanden.

Dies kann möglicherweise zu Problemen führen, weil beim Vertauschen der Fühlertypen das System nicht ordnungsgemäß funktioniert. Deshalb müssen die Temperaturfühler aufwändig gekennzeichnet werden, damit der Installateur bei der Montage diesen Fehler nicht begeht. Dennoch ist nicht ausgeschlossen, dass falsche Fühlertypen als Kollektor- und als Speichertemperaturfühler in einem Solarsystem verwendet werden. In bekannten Reglern führt dies zu einer dauerhaften Fehlfunktion, die nicht automatisch erkannt wird.

Kollektor- und Speichertemperaturfühler müssen an vorgegebene Eingänge am Regelgerät angeschlossen werden. Ist dies nicht der Fall und werden die Anschlüsse der beiden Temperaturfühler beispielsweise vertauscht, tritt eine Fehlfunktion des Reglers auf und die Solarenergie kann nicht genutzt werden, weil die Pumpe im Solarkreis dann weitestgehend ausgeschaltet bleibt. Die Ursache dafür liegt in einer gemessenen Speichertemperatur, beispielsweise mit Werten über 100 °C, die aber in Realität die Kollektortemperatur ist.

Weitere Probleme können eventuell auftreten, wenn bei der Installation einer Solaranlage der Kollektortemperaturfühler nicht richtig positioniert wird. Normalerweise befindet sich dieser im Austrittsbereich des Wärmeträgermediums aus dem Kollektorfeld in der Vorlaufleitung. Da jeder einzelne Sonnenkollektor im Kollektorfeld eine Tauchhülse für den Kollektortemperaturfühler besitzt, kann es vorkommen, dass dieser sich fälschlicherweise in der Nähe des Eintrittsbereiches der Rücklaufleitung in das Kollektorfeld befindet. Beim Einschalten der Pumpe kühlt dieser dann sehr schnell wieder ab und die gemessene Temperatur ist niedriger als in den meisten Teilen des Kollektorfeldes. Dies führt zu erheblichen Einbußen an Solarertrag, da die Pumpe im Solarkreis deutlich kürzer als bei regulären Anlagen in Betrieb bleibt und somit die Wärme aus den Sonnenkollektoren nicht abgeführt wird. Einschlägige Dokumente des Standes des Technik sind die EP-A-0676682 und die DE-A-19647216.

Aufgabe der vorliegenden Erfindung ist es, den Betrieb einer Solaranlage zu optimieren sowie mögliche Installationsfehler zu erkennen und in Form einer Wartungsmeldung anzuzeigen. Dabei soll ein möglichst effektiver Regelnotbetrieb sichergestellt werden, insbesondere um Einbußen an Solarertrag zu vermeiden.

Erfindungsgemäß wird dies mit den Merkmalen des Patentanspruches 1 gelöst. Vorteilhafte Weiterbildungen sind den Unteransprüchen zu entnehmen.

Das Verfahren zum Betreiben einer Solaranlage ist dadurch gekennzeichnet, dass in den jeweiligen Einbaupositionen, in den jeweiligen Fühlertypen und/oder in der Anordnung einer Temperaturmessstelle vertauschte Kollektor- und Speichertemperaturfühler über eine laufende Überwachung von Betriebswerten der Solaranlage erkannt werden und dass beim Vorliegen eines Fehlers ein Regelnotbetrieb eingeleitet wird. Mit dem Einsetzen des Regelnotbetriebes wird an einem zugeordneten Regler eine Fehler- oder Wartungsmeldung signalisiert.

Bei in den jeweiligen Einbaupositionen und/oder in den jeweiligen Typen vertauschten Kollektor- und Speichertemperaturfühlern mit physikalisch gleicher Wirkungsweise wird daher eine Abweichung in einer berechneten Temperatur erfasst. Über einen hinterlegten Schwellwert für die Größe dieser Abweichung wird dabei in Verbindung mit einer Abfrage des technisch möglichen Temperaturbereiches ein falscher Fühlertyp erkannt.

Für den Fall, dass ein Kollektortemperaturfühler als Speichertemperaturfühler mit entsprechendem Anschluss am für den Speichertemperaturfühler vorgesehenen Reglereingang verwendet wird, ergibt sich eine nahezu konstante Abweichung, etwa -12 K, des gemessen Temperaturwertes zur realen Speichertemperatur. Diese wird erfasst und beim Unterschreiten der realen Speichertemperatur unter etwa 17 °C wird dieser Fehler erkannt, weil dabei an der Stelle des Speichertemperaturfühlers ein üblicher Frostschutztemperatur-Schwellwert, etwa 5 °C, unterschritten wird. Im Fehlerfalle werden dann die entsprechenden Temperaturwerte als modifizierte Eingangswerte durch Addition oder Subtraktion der als Abweichung erfassten Temperaturdifferenz korrigiert.

Im Umkehrfall, nämlich bei Verwendung eines Speichertemperaturfühlers als Kollektortemperaturfühler mit entsprechendem Anschluss am für den Kollektortemperaturfühler vorgesehenen Reglereingang wird eine nahezu konstante Abweichung, etwa +12 K, des gemessen Temperaturwerts zur realen Speichertemperatur erfasst. Bei gleichzeitigem Vorliegen einer zu langen Laufzeit der Pumpe im Solarkreis wird dieser Fehler diagnostiziert. Dann werden die entsprechenden Temperaturwerte als modifizierte Eingangswerte durch Addition oder Subtraktion der als Abweichung erfassten Temperaturdifferenz korrigiert.

Weiterhin wird bei Verwendung von korrekten Fühlertypen, aber in den jeweiligen Einbaupositionen vertauschten Kollektor- oder Speichertemperaturfühlern das weitgehende Stillstehen der Pumpe im Solarkreis in Verbindung mit einer gemessenen Speichertemperatur erfasst. Diese ist nämlich im Fehlerfall höher als die real vorliegende Speichertemperatur. Beim Überschreiten eines vorgebbaren Zeitraumes für den Stillstand der Pumpe und einem Überschreiten eines vorgebbaren Schwellwertes für die gemessene Speichertemperatur, etwa über 100 °C, werden daher Speichertemperatur und Kollektortemperatur im Regler vertauscht. Danach arbeitet der Regler mit dem üblichen Regelalgorithmus.

Auch ein fälschlicherweise in der Rücklaufleitung des Solarkreises, insbesondere im Eintrittsbereich eines Kollektorfeldes angebrachter Kollektortemperaturfühler wird über ein sehr häufiges Ein- und Ausschalten der Pumpe erfasst. Dann werden beim Überschreiten eines vorgebbaren Schwellwertes für die Häufigkeit der Einschaltvorgänge an einem Tag, etwa 150 Einschaltvorgänge pro Tag, die Ausschaltkriterien für die Pumpe im Regler modifiziert. Dabei wird im Regler eine feste, temperaturabhängige Ausschalthysterese aufgehoben und die Pumpe erst dann ausgeschaltet, wenn eine vorgebbare Mindestbetriebszeit erreicht ist oder der Temperaturgradient, berechnet aus der Differenz der aktuell gemessenen zu der bei der letzten Messung vorherrschenden Temperatur am Kollektortemperaturfühler, negativ ist.

Mit der Erfindung steht ein einfaches Verfahren zum Betreiben einer Solaranlage zur Verfügung, mit dem mögliche Installationsfehler erkannt und in Form einer Wartungsmeldung angezeigt werden. Parallel dazu geht der Regler in einen effektiven Regelnotbetrieb bis zum Beheben des Fehlers über, um sicherzustellen, dass Einbußen an Solarertrag vermieden werden. Daher ist ein Fehler nicht mehr terminkritisch und dringlich, denn die Behebung kann im Rahmen der nächsten anstehenden Anlagenwartung erfolgen. Somit wird der Betrieb einer Solaranlage optimiert sowie die Installation, Wartungsfreundlichkeit und Bedienung verbessert. Eine Integration des Verfahrens in den Regler einer Solaranlage ist leicht möglich.

## Patentansprüche

1. Verfahren zum Betreiben einer Solaranlage zur Warmwasserbereitung und/oder zur Heizungsunterstützung, wobei die Solaranlage mindestens einen Solarkollektor aufweist, der an einen Solarkreis mit Pumpe angeschlossen ist, in dem eine Solarflüssigkeit als Wärme übertragendes Medium zirkuliert, wobei mittels der Solarflüssigkeit die aus der Solarenergie gewonnene Wärme auf das Wasser eines Warmwasserspeichers zur Warmwasserbereitung und/oder auf das Heizmedium eines Heizungskreises übertragen wird, wobei die Pumpe im Solarkreis nach der Temperaturdifferenz zwischen den an einem Kollektortemperaturfühler und einem Speichertemperaturfühler im unteren Bereich des Warmwasserspeichers erfassten Temperaturen geregelt wird, und wobei Kollektor- und Speichertemperaturfühler wahlweise gleiche oder unterschiedliche Typcharakteristiken und physikalische Wirkungsweisen besitzen,
**dadurch gekennzeichnet, dass** in den jeweiligen Einbaupositionen, in den jeweiligen Fühlertypen und/oder in der Anordnung einer Temperaturmessstelle vertauschte Kollektor- und Speichertemperaturfühler mit physikalisch gleicher Wirkungsweise über eine laufende Überwachung von Betriebswerten der Solaranlage erkannt werden, indem eine Abweichung in einer berechneten Temperatur erfasst wird und über einen hinterlegten Schwellwert für die Größe dieser Abweichung in Verbindung mit einer Abfrage des technisch möglichen Temperaturbereiches ein falscher Fühlertyp erfasst wird, und dass beim Vorliegen eines Fehlers ein Regelnotbetrieb eingeleitet wird.

2. Verfahren nach Anspruch 1,
**dadurch gekennzeichnet, dass** mit dem Einsetzen des Regelnotbetriebes an einem zugeordneten Regler eine Fehler- oder Wartungsmeldung signalisiert wird.

3. Verfahren nach den Ansprüchen 1 oder 2,
**dadurch gekennzeichnet, dass** bei Verwendung eines Kollektortemperaturfühlers als Speichertemperaturfühler mit entsprechendem Anschluss am für den Speichertemperaturfühler vorgesehenen Reglereingang eine nahezu konstante Abweichung, etwa -12 K, des gemessen Temperaturwertes zur realen Speichertemperatur erfasst wird, dass beim Unterschreiten der realen Speichertemperatur unter etwa 17 °C dieser Fehler erkannt wird, weil dabei an der Stelle des Speichertemperaturfühlers ein üblicher Frostschutztemperatur-Schwellwert, etwa 5 °C, unterschritten wird, und dass die entsprechenden Temperaturwerte als modifizierte Eingangswerte durch Addition oder Subtraktion der als Abweichung erfassten Temperaturdifferenz korrigiert werden.

4. Verfahren nach einem der Ansprüche 1 oder 2,
**dadurch gekennzeichnet, dass** bei Verwendung eines Speichertemperaturfühlers als Kollektortemperaturfühler mit entsprechendem Anschluss am für den Kollektortemperaturfühler vorgesehenen Reglereingang eine nahezu konstante Abweichung, etwa +12 K, des gemessen Temperaturwerts zur realen Speichertemperatur erfasst wird, dass bei gleichzeitigem Vorliegen einer zu langen Laufzeit der Pumpe im Solarkreis dieser Fehler erkannt wird, und dass die entsprechenden Temperaturwerte als modifizierte Eingangswerte durch Addition oder Subtraktion der als Abweichung erfassten Temperaturdifferenz korrigiert werden.

5. Verfahren nach den Ansprüchen 1 oder 2,
**dadurch gekennzeichnet, dass** bei Verwendung von korrekten Typen, aber in den jeweiligen Einbaupositionen vertauschten Kollektor- oder Speichertemperaturfühlern das weitgehende Stillstehen der Pumpe im Solarkreis in Verbindung mit einer gemessenen Speichertemperatur, welche höher ist als die reale Speichertemperatur, erfasst wird, und dass beim Überschreiten eines vorgebbaren Zeitraumes für den Stillstand der Pumpe und einem Überschreiten eines vorgebbaren Schwellwertes für die gemessene Speichertemperatur, etwa über 100 °C, Speichertemperatur und Kollektortemperatur im Regler vertauscht werden, wobei der Regler danach mit dem üblichen Regelalgorithmus arbeitet.

6. Verfahren nach einem der Ansprüche 1 bis 5,
**dadurch gekennzeichnet, dass** bei einem in der Rücklaufleitung des Solarkreises, insbesondere im Eintrittsbereich eines Kollektorfeldes angebrachten Kollektortemperaturfühler ein sehr häufiges Ein- und Ausschalten der Pumpe erfasst wird, und dass beim Überschreiten eines vorgebbaren Schwellwertes für die Häufigkeit der Einschaltvorgänge an einem Tag, etwa 150 Einschaltvorgänge pro Tag, die Ausschaltkriterien für die Pumpe im Regler modifiziert werden.

7. Verfahren nach einem der Ansprüche 1 bis 6,
**dadurch gekennzeichnet, dass** die Ausschaltkriterien für die Pumpe modifiziert werden, indem im Regler eine feste Ausschalthysterese aufgehoben wird und indem die Pumpe ausschaltet, wenn eine vorgebbare Mindestbetriebszeit erreicht ist oder der Temperaturgradient, berechnet aus der Differenz der aktuell gemessenen zu der bei der letzten Messung vorherrschenden Temperatur am Kollektortemperaturfühler, negativ ist.

## Claims

1. Method for operating a solar energy system for providing hot water and/or for backing up a heating system, the solar energy system having at least one solar collector, which is connected to a solar circuit with a pump, in which a solar fluid is circulated as a heat transfer medium, wherein the heat obtained from the solar energy is transferred by means of the solar fluid to the water of a hot-water storage tank for providing hot water and/or to the heating medium of a heating circuit, wherein the pump in the solar circuit is controlled on the basis of the temperature difference between the temperatures recorded at a collector-temperature sensor and a storage-tank-temperature sensor in the lower region of the hot-water storage tank, and wherein the collector-temperature and storage-tank-temperature sensors optionally have the same or different type characteristics and physical operating principles, **characterized in that**, when collector-temperature and storage-tank-temperature sensors with the same physical operating principle are used in the wrong respective installation positions, the wrong types of sensor are respectively used and/or a temperature measuring point is wrongly arranged, this is detected by means of a continuous monitoring of operating values of the solar energy system by recording a deviation in a calculated temperature and recording a wrong type of sensor on the basis of a stored threshold value for the size of this deviation in conjunction with an enquiry of the temperature range that is technically possible, and **in that**, if there is an error, emergency control operation is initiated.

2. Method according to Claim 1, **characterized in that**, when emergency control operation commences, an error message or maintenance message is signalled at an assigned controller.

3. Method according to Claim 1 or 2, **characterized in that**, if a collector-temperature sensor is used as a storage-tank-temperature sensor, with corresponding connection to the controller input intended for the storage-tank-temperature sensor, a virtually constant deviation, for instance -12 K, of the measured temperature value from the actual storage-tank temperature is recorded, **in that** this error is detected if the actual storage-tank temperature falls below for instance 17°C, because this involves the temperature at the point of the storage-tank-temperature sensor falling below a customary frost-protection-temperature threshold value, for instance 5°C, and **in that** the corresponding temperature values are corrected as modified input values by addition or subtraction of the temperature difference recorded as the deviation.

4. Method according to either of Claims 1 and 2, **characterized in that**, if a storage-tank-temperature sensor is used as the collector-temperature sensor, with corresponding connection to the controller input intended for the collector-temperature sensor, a virtually constant deviation, for instance +12 K, of the measured temperature value from the actual storage-tank temperature is recorded, **in that**, if there is at the same time an excessive running time of the pump in the solar circuit, this error is detected, and **in that** the corresponding temperature values are corrected as modified input values by addition or subtraction of the temperature difference recorded as the deviation.

5. Method according to Claim 1 or 2, **characterized in that**, if correct types are used, but collector-temperature or storage-tank-temperature sensors are used in the wrong installation positions respectively, the inactivity of the pump for much of the time in the solar circuit in conjunction with a measured storage-tank temperature that is higher than the actual storage-tank temperature is recorded, and **in that** if a predeterminable time period for the inactivity of the pump is exceeded and a predeterminable threshold value for the measured storage-tank temperature, for instance over 100°C, is exceeded, the storage-tank temperature and the collector temperature are changed over in the controller, after which the controller operates with the usual control algorithm.

6. Method according to one of Claims 1 to 5, **characterized in that**, with a collector-temperature sensor fitted in the return line of the solar circuit, in particular in the inlet region of a collector array, very frequent switching on and off of the pump is recorded, and **in that**, if a predeterminable threshold value for the frequency of the switching-on operations in one day, for instance 150 switching-on operations per day, is exceeded, the switching-off criteria for the pump are modified in the controller.

7. Method according to one of Claims 1 to 6, **characterized in that** the switching-off criteria for the pump are modified by cancelling a fixed switching-off hysteresis in the controller and by the pump switching off when a predeterminable minimum operating time is reached or the temperature gradient, calculated from the difference between the currently measured temperature and the temperature prevailing in the last measurement at the collector-temperature sensor, is negative.

## Revendications

1. Procédé de conduite d'une installation solaire destinée à préparer de l'eau chaude et/ou d'assister le chauffage,
l'installation solaire présentant au moins un collecteur solaire raccordé à un circuit solaire doté d'une pompe et dans lequel un liquide solaire circule en tant que fluide caloporteur,
la chaleur récupérée dans l'énergie solaire étant transférée au moyen du liquide solaire à l'eau d'un accumulateur d'eau chaude servant à préparer de l'eau chaude et/ou au fluide de chauffage d'un circuit de chauffage,
la pompe du circuit solaire étant régulée en fonction des températures détectées par une sonde de température de collecteur et une sonde de température d'accumulateur disposée dans la partie inférieure de l'accumulateur d'eau chaude,
la sonde de température de collecteur et la sonde de température d'accumulateur possédant au choix des caractéristiques typiques identiques ou différentes et des modes physiques de fonctionnement identiques ou différents,
**caractérisé en ce que**
une inversion des positions de montage de sondes de différents types et/ou de l'agencement des emplacements des sondes de mesure de température de collecteur et de température d'accumulateur d'un même mode de fonctionnement physique est détectée par une surveillance permanente des modes de fonctionnement de l'installation solaire en saisissant un écart sur une température calculée et en détectant que le type de sonde est erroné par l'intermédiaire d'une valeur de seuil conservée en mémoire pour la grandeur de cet écart en association avec une interrogation de la plage de température techniquement possible et
**en ce qu'**un mode de fonctionnement de régulation de secours est établi en cas de présence d'une erreur.

2. Procédé selon la revendication 1, **caractérisé en ce que** lors de l'établissement du mode de fonctionnement de régulation de secours, un message d'erreur ou de maintenance est délivré sur un régulateur associé.

3. Procédé selon les revendications 1 ou 2, **caractérisé en ce que** lors de l'utilisation d'une sonde de température de collecteur comme sonde de température d'accumulateur avec raccordement correspondant sur l'entrée du régulateur prévue pour la sonde de température d'accumulateur, un écart sensiblement constant d'environ -12 K entre la valeur mesurée de la température et la valeur réelle de l'accumulateur est détectée, **en ce que** lorsque la température réelle de l'accumulateur est plus basse d'environ 17°C, cette erreur est détectée parce qu'alors une valeur de seuil habituelle de température de protection contre le gel, d'environ 5°C, n'est pas atteinte à l'emplacement de la sonde de température et d'accumulateur et **en ce que** les valeurs de température correspondantes sont corrigées en tant que valeurs d'entrée modifiées, par addition ou soustraction de la différence de température détectée comme écart.

4. Procédé selon l'une des revendications 1 ou 2, **caractérisé en ce que** lorsqu'une sonde de température d'accumulateur est utilisée comme sonde de température de collecteur avec raccordement correspondant à l'entrée du régulateur prévue pour la sonde de température de collecteur, un écart sensiblement constant d'environ +12 K entre la valeur de température mesurée et la valeur réelle de l'accumulateur est détectée, **en ce que** cette erreur est détectée si en même temps la durée de fonctionnement de la pompe du circuit solaire est trop longue et **en ce que** les valeurs de température correspondantes sont corrigées en tant que valeurs d'entrée modifiées, par addition ou soustraction de la différence de température saisie comme écart.

5. Procédé selon l'une des revendications 1 ou 2, **caractérisé en ce que** lorsque des types corrects sont utilisés mais dans des positions de montage inversées des sondes de température de collecteur ou de température d'accumulateur, l'arrêt prolongé de la pompe du circuit solaire associé à une température d'accumulateur mesurée supérieure à la température réelle de l'accumulateur sont détectés et **en ce que** lorsqu'une durée prédéterminée d'arrêt de la pompe est dépassée et qu'une valeur de seuil prédéterminée de la température mesurée sur l'accumulateur est dépassée et atteint sensiblement plus de 100°C, la température d'accumulateur et la température de collecteur sont échangées dans le régulateur, le régulateur travaillant ensuite avec l'algorithme de régulation habituel.

6. Procédé selon l'une des revendications 1 à 5, **caractérisé en ce que** lorsqu'une sonde de température de collecteur est installée dans le conduit de retour du circuit solaire, en particulier au niveau de l'entrée dans un champ de collecteur, un branchement et un débranchement très fréquent de la pompe sont détectés et lorsqu'une valeur de seuil prédéterminée de la fréquence des opérations de branchement sur une journée d'environ 150 opérations de branchement par jour est dépassée, les critères de débranchement de la pompe sont modifiés dans le régulateur.

7. Procédé selon l'une des revendications 1 à 6, **caractérisé en ce que** les critères de débranchement de la pompe sont modifiés en augmentant dans le régulateur l'hystérésis fixe de débranchement et en débranchant la pompe lorsqu'une durée minimale de fonctionnement prédéterminée est atteinte ou lorsque le gradient de température calculé à partir de la différence entre la température effectivement mesurée et la température qui régnait lors de la dernière mesure sur la sonde de température de collecteur est négatif.
